# EUROPÄISCHE PATENTSCHRIFT

(11) **EP 1 833 632 B1**
(45) Veröffentlichungstag und Bekanntmachung des Hinweises auf die Patenterteilung: **22.10.2008**
(21) Anmeldenummer: 05804909.9
(22) Anmeldetag: 21.10.2005
(51) Int. Cl.: B23B 31/11, F16D 1/06

(54) **WERKZEUGMASCHINE, INSBESONDERE DIAMANTBOHRMASCHINE**
MACHINE TOOL, ESPECIALLY DIAMOND DRILL
MACHINE-OUTIL, EN PARTICULIER PERCEUSE A DIAMANT

(30) Priorität: 08.12.2004 DE 102004059112
(43) Veröffentlichungstag der Anmeldung: 19.09.2007
(73) Patentinhaber: ROBERT BOSCH GMBH, 70442 Stuttgart (DE)
(72) Erfinder: SCHUELE, Manfred, 74429 Sulzbach-Laufen (DE); BUCK, Manfred, 72622 Nuertingen (DE); KRAENZLER, Ernst, 70771 Leinfelden-Echterdingen (DE); FEHRLE, Siegfried, 70771 Leinfelden-Echterdingen (DE)
(86) Internationale Anmeldenummer: PCT/EP2005/055445
(87) Internationale Veröffentlichungsnummer: WO 2006/061291

(56) Entgegenhaltungen:
- EP-A- 1 384 540
- DE-C1- 3 824 040

## Beschreibung

### Stand der Technik

Die Erfindung geht aus von einer Werkzeugmaschine, insbesondere Diamantbohrmaschine, nach dem Oberbegriff des Anspruchs 1.

Bei in der Diamantbohrtechnik eingesetzten Werkzeugmaschinen ist das übliche Verbindungselement zwischen der rotierenden Spindel und der Bohrkrone ein Schraubgewinde mit einem 1¼"-Innengewinde im Schaft der Bohrkrone und einem 1¼ "-Außengewinde auf dem freien Endabschnitt der Spindel. Beim Bohren zieht sich durch das Drehmoment, das die Spindel auf die Bohrkrone ausübt, die Schraubverbindung zusammen, und zwar so stark, dass der Bedienende die Verschraubung nur mit zwei Maulschüsseln zu lösen vermag. Häufig werden dabei beim Lösen hohe Druck- und Schlagkräfte auf die Maulschlüssel ausgeübt, was langfristig zu einem Verbiegen der Spindel und einer Schädigung der Lagerung der Spindel im Maschinengehäuse führt. Dadurch entstehen Rundlauffehler, die die Werkzeugmaschine unbrauchbar machen.

Um das Lösen der Schraubverbindung zu erleichtern, ist es bereits bekannt, zwischen der Spindel und dem Schaft der Bohrkrone eine Lösevorrichtung in Form eines Kupferrings oder eines sog. Leichtlöserings einzulegen. Aber auch hier sind zum Lösen der Gewindeverbindung zwischen Bohrkrone und Spindel Werkzeuge, nämlich zwei Maulschlüssel, erforderlich.

Eine bekannte tragbare Schleifmaschine (DE 38 24 040 C1) weist eine Spanneinrichtung zum axialen Festspannen einer Schleifscheibe auf, mittels der die Schleifscheibe auf einem Flansch der Spindel axial festgespannt wird, wobei der Flansch einen drehfesten Formschluss mit der Spindel eingeht. Die Spanneinrichtung weist eine Spannmutter mit einem Spannflansch und einer davon abgehenden, hülsenförmigen Nabe auf, die durchgängig mit einem Innengewinde versehen ist. Mittels des Innengewindes wird die Spannmutter auf ein am freien Ende der Spindel ausgebildetes Außengewinde aufgeschraubt. Hierzu sind im Spannflansch zwei diametral angeordnete Durchgangslöcher zum Einsetzen eines manuell drehbaren Werkzeugs vorgesehen. Auf der Schleifscheibe liegt eine Spannscheibe auf, die von dem Spannflansch der Spannmutter her mit einer axial gerichteten Druckkraft beaufschlagbar ist und das Werkzeug gegen den Spindelflansch presst. Die Spannscheibe ist mit der Nabe der Spannmutter axial verschiebbar, und drehfest gekoppelt. Axial zwischen der Spannscheibe und dem Spannflansch der Spannmutter sind Stützkörper angeordnet, die auf voneinander abgekehrten Seiten abgeschrägte Stützflächen tragen und damit an gleich geschrägten Stützflächen, die an Spannscheibe und Spannflansch ausgebildet sind, anliegen. Zwischen der Spannscheibe und dem Spannflansch der Spannmutter ist ein Schaltring angeordnet der über Rollkörper die Stützkörper radial nach innen drückt, wodurch ein fester lichter Axialabstand zwischen dem Spannflansch der Spannmutter und der Spannscheibe hergestellt wird. Wird der Schaltring um einen bestimmten Weg gedreht, so können die Rollkörper radial nach außen ausweichen und die Stützkörper zu einer begrenzten Radialverschiebung freigeben. Aufgrund der Schrägflächen kann dabei die Spannscheibe axial dem Spanndruck ausweichen, so dass eine entsprechende axiale Entspannung erzielt wird. Daraufhin kann die Spannmutter von Hand von der Spindel abgeschraubt werden, wobei die gesamte Spanneinrichtung von der Spindel abgenommen wird.

Eine bekannte Werkzeugmaschine für ein als Kernbohrkrone mit Schneidkörpern aus Hartstoff ausgebildetes Werkzeug zum Bearbeiten von spröden Materialien, wie Gestein, Beton oder Mauerwerk (EP 1384 540 A1), weist eine rotatorisch antreibbare Spindel, die einen mit einem Außengewinde versehenen Endabschnitt zum Aufschrauben des hohlzylindrischen Schaftes der Kernbohrkrone besitzt, und eine zwischen Schaft und Spindel angeordnete Lösevorrichtung auf. Die Lösevorrichtung umfasst spindelseitig einen Axialanschlagflansch und werkzeugseitig ein eine Axialflanschfläche ausbildendes Anschlagmittel: Das Anschlagmittel ist durch axial begrenzt bewegliche Klemmkeile axial druckverspannbar, und die Klemmkeile sind über ein handbetätigbares, versetzbares Endarretiermittel aus dieser Druckverspannung versetzbar. Mittels der Lösevorrichtung ist ein werkzeugloses Wechsel der Kernbohrkrone möglich.

### Vorteile der Erfindung

Die erfindungsgemäße Werkzeugmaschine, insbesondere Diamantbohrmaschine, mit den Merkmalen des Anspruchs 1 hat den Vorteil, dass die im Betrieb sich festziehende Schraubverbindung zwischen Werkzeugschaft und Spindel werkzeuglos und leicht gelöst werden kann. Durch Drehen des Schaltrings wird der lichte Abstand zwischen den Stützringen reduziert, wodurch zwischen Werkzeugschaft und dem an diesen anliegenden Stützring ein kleiner Axialspalt entsteht, so dass die Verspannung zwischen Werkzeugschaft und Stützring aufgehoben ist und das Werkzeug sich leicht abschrauben lässt. Die Lösevorrichtung bleibt unverlierbar an der Spindel und kann auch bei fehlendem Werkzeug nicht abfallen. Lediglich für Serviceaktivitäten ist es notwendig und möglich, die Lösevorrichtung von der Spindel durch deren einfache Demontage abzunehmen. Durch die unmittelbare Anordnung der Stützringe auf der Spindel ist es in einfacher Weise möglich, die Lösevorrichtung einerseits gegenüber der Spindel und andererseits gegenüber dem Schaltring abzudichten, so dass die Lösevorrichtung wasserdicht ausgeführt werden kann, was besonders für die Diamantbohrtechnik von tragender Bedeutung ist, da hier meist mit Wasserkühlung gearbeitet wird.

Durch die an die Spindel im Bereich deren Radialschulter eingesetzten, in die in den Stützringen vorgesehenen Bohrungen eintauchenden Axialstifte wird in konstruktiv einfacher Weise die drehstarre Festlegung der Stützringe an der Spindel erreicht, die die gute Abdichtung der Leichtlösevorrichtung nicht beeinträchtigt. Selbstverständlich ist es möglich, den spindelfixierten Stützring einstückig mit der Spindel auszuführen, doch bringt die von der Spindel losgelöste Herstellung des spindelfixierten Stützrings Fertigungsvorteile bei der Bearbeitung des Stützrings.

Durch die in den weiteren Ansprüchen aufgeführten Maßnahmen sind vorteilhafte Weiterbildungen und Verbesserungen der im Anspruch 1 angegebenen Werkzeugmaschine möglich.

Gemäß einer vorteilhaften Ausführungsform der Erfindung wird die Wasserdichtheit der Löseverbindung dadurch erreicht, dass einerseits in umlaufende Ringnuten im Spindelmantel eingesetzte O-Ringe sich an die inneren Ringflächen der beiden Stützringe anpressen und andererseits die äußeren Ringflächen der Stützringe über Lippendichtungen gegenüber der inneren Ringfläche des Schaltrings abgedichtet sind. Erfolgt die Abstützung des spindelfixierten Stützrings an einer an einem Radialflansch der Spindel ausgebildeten Radialschulter, so übergreift die diesem Stützring zugeordnete Lippendichtung zumindest teilweise diesen Radialflansch. Gemäß einer vorteilhaften Ausführungsform der Erfindung wird die Begrenzung der Axialverschiebung des werkzeugschaftseitigen Stützrings durch einen Sprengring realisiert, der in einer in der Spindel ausgebildeten Umfangsnut eingesetzt ist und radial über den Spindelumfang vorsteht. Wird dieser Sprengring entfernt, so kann die Lösevorrichtung demontiert und von der Spindel abgenommen werden.

### Zeichnung

Die Erfindung ist anhand eines in der Zeichnung dargestellten Ausführungsbeispiels in der nachfolgenden Beschreibung näher erläutert. Es zeigen:
- Fig. 1: ausschnittweise einen Längsschnitt einer Spindel einer Werkzeugmaschine mit Lösevorrichtung und aufgeschraubtem Werkzeug,
- Fig. 2: eine perspektivische Ansicht der Lösevorrichtung nach Entfernen eines werkzeugschaftseitigen Stützrings.

### Beschreibung des Ausführungsbeispiels

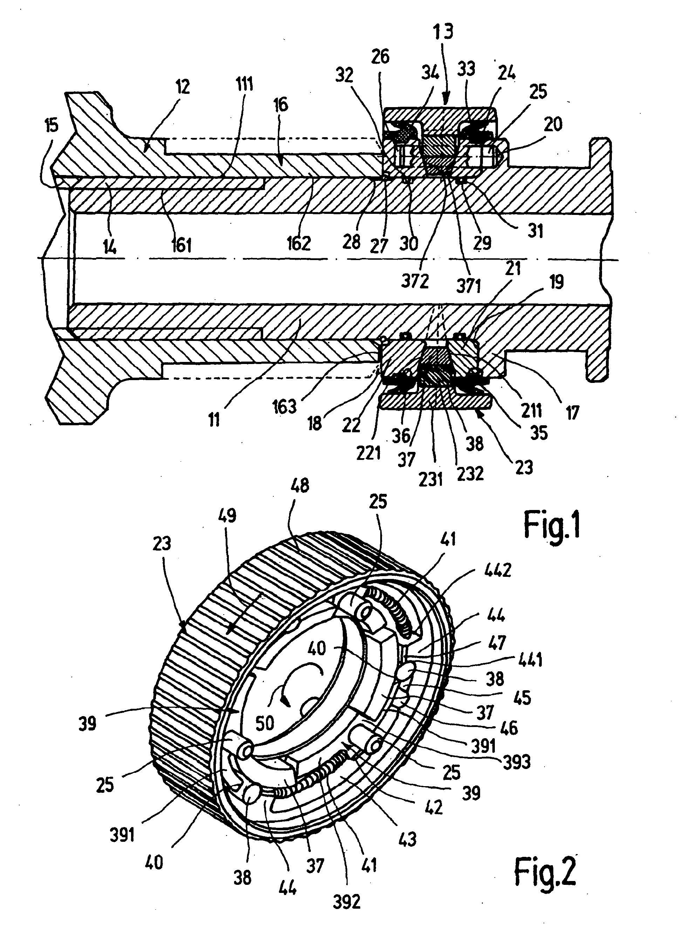

In Fig. 1 ist ausschnittweise ein Längsschnitt einer rotatorisch antreibbaren Spindel 11 einer Werkzeugmaschine dargestellt, die ein auf der Spindel 11 verschraubtes Werkzeug 12 trägt und eine Lösevorrichtung 13 zum Lösen der beim Betrieb sich festziehenden Verschraubung zwischen Werkzeug 12 und Spindel 11 aufweist. Zum Aufnehmen des Werkzeugs 12 ist die Spindel 11 an ihren freien Endabschnitt 111 mit einem Außengewinde 14 versehen, und das Werkzeug 12 weist einen hülsenförmigen Werkzeugschaft 16 mit einem auf das Außengewinde 14 aufschraubbaren Innengewinde 15 auf. Das Innengewinde 15 ist in einem vorderen, durchmesserkleineren Schaftabschnitt 161 des Werkzeugschafts 16 ausgebildet, so dass der hintere, durchmessergrößere Schaftabschnitt 162 des Werkzeugschafts 16 die Spindel 11 übergreift. Die Drehrichtung der Spindel 11 ist so festgelegt, dass beim Rotieren der Spindel 11 die Schraubverbindung zwischen Außengewinde 14 und Innengewinde 15 sich festzieht. Die Drehrichtung der Spindel 11 ist in Fig. 2 durch den Pfeil 50 gekennzeichnet. In dem in Fig. 1 dargestellten Ausführungsbeispiel der Werkzeugmaschine 12 ist das Werkzeug eine Diamantbohrkrone, die einstückig an den Werkzeugschaft 121 angeformt ist.

Zwischen dem hinteren Ende des Werkzeugschafts 16 und einem an der Spindel 11 einstückig ausgebildeten Radialflansch 17 ist die Lösevorrichtung 13 angeordnet, die unverlierbar an der Spindel 11 gehalten ist. Im oberen Halbschnitt in Fig. 1 ist die Lösevorrichtung 13 in ihrer inaktiven Stellung dargestellt, bei welcher die ringförmige Stirnfläche 163 des Werkzeugschaftes 16 sich an die Lösevorrichtung 13 anpresst, und in dem unteren Halbschnitt ist die Lösevorrichtung 13 in ihrer aktiven Stellung dargestellt, in welcher zwischen der ringförmigen Stirnfläche 163 des Werkzeugschaftes 16 und der Lösevorrichtung 13 sich ein kleiner, umlaufender Axialspalt 18 gebildet hat.

Die Lösevorrichtung 13 weist einen an der Spindel 11 festgelegten, spindelfixierten ersten Stützring 21 und einen im Axialabstand dazu auf der Spindel 11 axial verschieblich sitzenden, werkzeugschaftseitigen zweiten Stützring 22, der an dem ersten Stützring 21 drehstarr festgelegt ist, sowie einen zwischen die Stützringe 21, 22 eingreifenden Schaltring 23 auf, der durch sein Verdrehen eine Änderung des lichten Abstands zwischen den beiden Stützringen 21, 22 bewirkt. Der erste Stützring 21 sitzt lose auf der Spindel 11 auf und stützt sich an einer am Radialflansch 17 ausgebildeten Ringschulter 19 ab. Er besitzt mehrere, im Ausführungsbeispiel drei, um gleiche Umfangswinkel zueinander versetzte, axiale Durchgangsbohrungen 24. Im Radialflansch 17 der Spindel 11 sind eine gleiche Anzahl von vorzugsweise als Sacklochgewinde ausgeführte Gewindebohrungen 20 vorgesehen, die um gleiche Umfangswinkel zueinander versetzt angeordnet sind. Durch jeweils eine Durchgangsbohrung 24 im ersten Stützring 21 ist ein Axialstift 25 formschlüssig hindurchgeschoben und in einer Gewindebohrung 20 im Radialflansch 17 verschraubt. Anstelle von Gewindebohrungen 20 können auch einfache Sackbohrungen in den Radialflansch 17 eingebracht und die Axialstifte 25 als Klemmstifte ausgeführt werden, die in die Sackbohrungen eingepresst werden. Der zweite Stützring 22 weist eine gleiche Anzahl von vorzugsweise als Sacklöcher ausgeführten Axialbohrungen 26 auf, die ebenfalls um gleiche Umfangswinkel zueinander versetzt angeordnet sind. In die Axialbohrungen 26 tauchen die Axialstifte 25 gleitend ein, so dass der zweite Stützring 22 einerseits axial zu dem ersten Stützring 21 verschiebbar ist und andererseits mit dem ersten Stützring 21 drehstarr verbunden ist. Zur Begrenzung der Axialverschiebung des zweiten Stützrings 22 ist ein Sprengring 27 vorgesehen, der in eine in die Spindel 11 eingearbeitete Umfangsnut 28 eingesetzt ist und radial über den Umfang der Spindel 11 vorsteht. Dieser Sprengring 27 bildet einen Anschlag für den Stützring 22 und verhindert ein Auseinanderfallen der Lösevorrichtung 13 beim Abschrauben des Werkzeugs 12 von der Spindel 11.

Um die Lösevorrichtung 13 gegen eindringendes Wasser zu schützen, sind die Stützringe 21, 22 einerseits gegenüber der Spindel 11 und andererseits gegenüber dem Schaltring 23 abgedichtet. Hierzu sind in den Umfang der Spindel 11 zwei voneinander beabstandete Ringnuten 29, 30 eingearbeitet, in die jeweils ein als O-Ring ausgebildeter Dichtungsring 31, 32 eingesetzt ist. Der Dichtungsring 31 presst sich an die innere Ringfläche des ersten Stützrings 21 und der Dichtungsring 32 an die innere Ringfläche des zweiten Stützrings 22 an. Zwischen den äußeren Ringflächen der Stützringe 21, 22 und der inneren Ringfläche des Schaltrings 23 ist jeweils eine Lippendichtung 33 bzw. 34 angeordnet, wobei die dem ersten Stützring 21 zugeordnete Lippendichtung 33 den Radialflansch 17 an der Spindel 11 teilweise überdeckt. Die Lippendichtungen 33, 34 sind in umlaufenden Nuten 35 bzw. 36 in den Stützringen 21, 22 formschlüssig gehalten.

Die Stützringe 21, 22 weisen auf einander zugekehrten Seiten jeweils eine Schrägfläche 211 bzw. 221 auf, die so geschrägt sind, dass der Axialabstand zwischen den beiden Schrägflächen 211 und 221 sich zur Spindel 11 hin verjüngt. Diese Schrägflächen 211, 221 wirken mit Keilflächen 371, 372 zusammen, die auf voneinander abgekehrten Seiten von zwischen den Stützringen 21, 22 angeordneten Spannkeilen 37 ausgebildet sind (Fig. 1). Werden die Spannkeile 37 radial nach außen bewegt (untere Hälfte in Fig. 1) so verringert sich der lichte Abstand zwischen den Stützringen 21, 22, und der bereits erwähnte Axialspalt 18 kann sich ausbilden. Werden die Spannkeile 37 radial nach innen gedrückt (obere Hälfte in Fig. 1) so wird der Abstand der beiden Stützringe 21, 22 voneinander vergrößert. Die Spannkeile 37 werden in ihrer nach innen gedrückten Position durch Wälzkörper 38, gehalten, die im Ausführungsbeispiel als Zylinderrollen ausgebildet sind und zwischen den Spannkeilen 37 und dem Schaltring 23 einliegen.

Wie aus Fig. 2 ersichtlich ist, weist der erste Stützring 21 drei axial vorstehende, etwa Z-förmige Rippen 39 auf, die um gleiche Umfangswinkel zueinander versetzt angeordnet sind. Jede Rippe 39 weist einen in Umfangsrichtung sich erstreckenden, bogenförmigen äußeren Schenkel 391 und einen in Unfangsrichtung sich erstreckenden, bogenförmigen inneren Schenkel 392 sowie einen die Schenkel 391, 392 miteinander verbindenden Radialsteg 393 auf. Jeweils ein Spannkeil 37 ist zwischen dem Radialsteg 393 der einen Rippe 39 und dem freien Ende des inneren Schenkels 392 der in Drehrichtung vorausliegenden Rippe 39 mit Spiel eingelegt und wird von dem äußeren Schenkel 391 der Rippe 39 teilweise übergriffen. Das freie Ende des äußeren Schenkels 391 bildet eine Anschlagfläche 40 für einen der Wälzkörper 38. Längs des inneren Schenkels 392 einer jeden Rippe 39 erstreckt sich eine Druckfeder 41, die sich einerseits an dem Radialsteg 393 der Rippe 39 und andererseits an dem Schaltring 23 abstützt. Die Z-förmigen Rippen 39 tragen im Bereich des Radialsteges 393 axial vorspringende Führungsnoppen 42 auf denen der Schaltring 23 mit ringabschnittförmigen Zentrierflächen 43 radial geführt ist. Des weiteren weist der Schaltring 23 eine der Anzahl der Spannkeile 37 entsprechende Zahl von Anschlagnasen 44 auf, die um gleiche Umfangswinkel zueinander versetzt sind und radial nach innen vorstehen. Von den beiden voneinander abgekehrten, radial sich erstreckenden Nasenflächen bildet die eine eine Anschlagfläche 441 für einen der Wälzkörper 38, an die der Wälzkörper 38 durch die an dem äußeren Schenkel 391 der Rippe 39 ausgebildete Anschlagfläche 40 angelegt wird, und die andere eine Abstützfläche 442 für eine der Druckfedern 41. Am Schaltring 23 sind ferner eine der Anzahl der Spannkeile 37 entsprechende Zahl von in Umfangsrichtung sich erstreckenden Spannflächen 45 vorhanden, die so ausgebildet sind, dass die von den Stützringen 21, 22 auf die Spannkeile 37 aufgebrachten, radial nach außen wirkenden Kraftkomponenten die zwischen den Spannkeilen 37 und den Spannflächen 45 einliegenden Wälzköper 38 auf die Spannflächen 45 aufpressen. In jeder Spannfläche 45 ist eine Einwölbung 46 zum zumindest teilweisen Aufnehmen eines Wälzkörper 38 vorgesehen. Die Einwölbungen 46 sind so ausgeführt, dass die einliegenden Wälzkörper 38 eine Radialverschiebung der Spannkeile 37 nach außen ermöglichen. Am freien Ende der Anschlagnasen 44 sind auf deren voneinander abgekehrten, axialen Nasenflächen Abschrägungen 441 (Fig. 2) vorhanden, über die der Schaltring 23 auf den Schrägflächen 211 und 221 der Stützringe 21, 22 axial geführt ist.

Der Schaltring 23 besitzt ein T-förmiges Querschnittsprofil mit einem in Achsrichtung sich erstreckenden Quersteg 231 und einen in Radialrichtung weisenden Mittelsteg 232. Außen auf dem Quersteg 231 ist eine Grifffläche 48 zum manuellen Verdrehen des Schaltrings 23 ausgebildet, während die Anschlagnasen 44, die Zentrierflächen 43 und die Spannflächen 45 mit Einwölbungen 46 an dem von dem Quersteg 231 abgekehrten Ende des Mittelstegs 232 ausgebildet sind. Die beiden Lippendichtungen 33, 34 drücken sich an die innere Ringfläche des Querstegs 231 an.

Die Lösevorrichtung 13 wird durch die Druckfedern 41 in ihrem in Fig. 2 dargestellten inaktiven Zustand gehalten. In dieser inaktiven Stellung liegen die Wälzkörper 38 zwischen den Spannkeilen 37 und den am Schaltring 23 ausgebildeten Spannflächen 45 und halten die Spannkeile 37 in Richtung der Spindel 11 gedrückt (obere Hälfte in Fig. 1). Die beiden Stützringe 21, 22 haben einen maximalen Abstand voneinander. Beim Rotieren der Spindel 11 verschraubt sich zunehmend das Werkzeug 12 auf der Spindel 11 und presst sich mit seinem Werkzeugschaft 16 an den zweiten Stützring 22 der Lösevorrichtung 13 an, wobei sich ein Presssitz zwischen Werkzeugschaft 16 und Lösevorrichtung 13 einstellt.

Soll das Werkzeug 12 von der Spindel 11 abgeschraubt werden, so ist der Schaltring 23 in Richtung Pfeil 49 in Fig. 2 gegen die Kraft der Druckfedern 41 zu drehen. Dadurch rollen Wälzkörper 38 zwischen den Spannkeilen 37 und den Spannflächen 45 am Schaltring 23 so weit, dass die Wälzkörper 38 nunmehr in die Einwölbungen 46 einzutauchen vermögen. Mit Eintauchen der Wälzkörper 38 in die Einwölbungen 46 werden die Spannkeile 37 radial entlastet, und durch die auf den zweiten Stützring 22 wirkende axiale Presskraft werden über die Schrägflächen 211 und 221 an den Stützringen 21, 22 und die Keilflächen 371, 372 an den Spannkeilen 37 die Spannkeile 37 etwas nach außen geschoben, so dass sich der kleine Axialspalt 18 an der Stirnfläche des Werkzeugschaftes 16 auszubilden vermag. Die Verspannung zwischen Werkzeug und Spindel ist werkzeuglos gelöst, und das Werkzeug 12 kann leicht von der Spindel 11 abgeschraubt werden. Der Sprengring 27 verhindert, dass mit Abschrauben des Werkzeugs 12 der zweite Stützring 22 von der Spindel 11 abfallen kann.

## Patentansprüche

1. Werkzeugmaschine, insbesondere Diamantbohrmaschine, mit einer rotatorisch antreibbaren Spindel (11), die einen mit einem Außengewinde (14) versehenen Endabschnitt (111) aufweist, mit einem Werkzeug (12), insbesondere einer Bohrkrone, das einen mit einem Innengewinde (15) versehenen, hohlzylindrischen Werkzeugschaft (16) zum Aufschrauben auf den Spindel-Endabschnitt (111) aufweist, und mit einer zwischen Werkzeugschaft (16) und Spindel (11) angeordneten, an der Spindel (11) unverlierbar festgelegten Lösevorrichtung (13), die einen auf der Spindel (11) fixierten Stützring (21) und einen davon beabstandet auf der Spindel (11) sitzenden, begrenzt axial verschieblichen Stützring (22), der an dem anderen Stützring (21) drehstarr gehalten ist und sich an der Stirnfläche des Werkzeugschaftes (16) abstützt, sowie einen zwischen die Stützringe (21, 22) eingreifenden, manuell drehbaren Schaltring (23) zum Ändern des lichten Abstandes zwischen den Stützringen (21, 22) aufweist, **dadurch gekennzeichnet, dass** der spindelfixierte Stützring (21) auf der Spindel (11) an einer an der Spindel (11) ausgebildeten Ringschulter (19) axial anliegend lose sitzt und mindestens zwei axiale Durchgangsbohrungen (24) aufweist, durch die jeweils ein in die Spindel (11) im Bereich der Ringschulter (19) kraft- und/oder formschlüssig eingesetzter Axialstift (25) formschlüssig hindurchtritt, und dass der werkzeugschaftseitige Stützring (22) mindestens zwei Axialbohrungen (26) aufweist, in die jeweils ein Axialstift (25) gleitend eintaucht.

2. Werkzeugmaschine nach Anspruch 1, **dadurch gekennzeichnet, dass** die Axialbohrungen (26) als Sacklöcher ausgeführt sind.

3. Werkzeugmaschine nach Anspruch 1 oder 2, **dadurch gekennzeichnet, dass** die Ringschulter (19) an einem an der Spindel (11) einstückig angeformten Radialflansch (17) ausgebildet ist.

4. Werkzeugmaschine nach einem der Ansprüche 1 - 3, **dadurch gekennzeichnet, dass** zur Begrenzung der Axialverschiebung des werkzeugschaftseitigen Stützrings (22) ein Sprengring (27) vorgesehen ist, der in einer in die Spindel (11) eingearbeiteten Umfangsnut (28) einliegt.

5. Werkzeugmaschine nach einem der Ansprüche 1 - 4, **dadurch gekennzeichnet, dass** zwei jeweils in einer in die Spindel (11) eingearbeiteten, umlaufenden Ringnut (29, 30) einliegende Dichtungsringe (31, 32) sich an die innere Ringflächen der Stützringe (21, 22) andrücken und dass die äußeren Ringflächen der Stützringe (21, 22) mittels jeweils einer Lippendichtung (33, 34) gegenüber dem Schaltring (23) abgedichtet sind.

6. Werkzeugmaschine nach Anspruch 3 und 5, **dadurch gekennzeichnet, dass** die dem spindelfixierten Stützring (21) zugeordnete Lippendichtung (33) den Radialflansch (17) zumindest teilweise übergreift.

7. Werkzeugmaschine nach einem der Ansprüche 1 - 6, **dadurch gekennzeichnet, dass** die Stützringe (21, 22) auf einander zugekehrten Seiten Schrägflächen (211, 221) aufweisen, deren lichter Abstand sich zur Spindel (11) hin verjüngt, und dass zwischen den Schrägflächen (211, 221) um vorzugsweise gleiche Umfangswinkel zueinander versetzte, segmentartige Spannkeile (37) angeordnet sind, die mit auf voneinander abgekehrten Seiten ausgebildeten Keilflächen (371, 372) auf den Schrägflächen (211, 221) der Stützringe (21, 22) aufliegen und über zwischen den Spannkeilen (37) und dem Schaltring (23) angeordnete Wälzkörper (38), vorzugsweise Zylinderrollen, radial verschieblich sind.

8. Werkzeugmaschine nach Anspruch 7, **dadurch gekennzeichnet, dass** einer der Stützringe (21, 22), vorzugsweise der spindelfixierte Stützring (21), eine der Anzahl der Spannkeile (37) entsprechende Zahl von axial vorstehenden, etwa Z-förmigen Rippen (39) mit einem inneren und einem äußeren, jeweils in Umfangsrichtung sich erstreckenden Schenkel (391, 392), und mit einem die Schenkel (391, 392) verbindenden Radialsteg (393) aufweist, dass jeweils ein Spannkeil (37) zwischen dem Radialsteg (393) der einen Rippe (39) und dem freien Ende des inneren Schenkels (392) der in Umfangsrichtung benachbarten Rippe (39) einliegt und von dem äußeren Schenkel (391) der Rippe (39) teilweise übergriffen ist, dass das freie Ende des äußeren Schenkels (391) eine Anschlagfläche (40) für einen der Wälzkörper (38) bildet und dass an dem inneren Schenkel (392) eine in Umfangsrichtung sich erstreckende Druckfeder (41) anliegt, die sich einerseits an dem Radialsteg (393) der Rippe (39) und andererseits an dem Schaltring (23) abstützt.

9. Werkzeugmaschine nach Anspruch 8, **dadurch gekennzeichnet, dass** die Z-förmigen Rippen (39) radial vorspringende Führungsnoppen (42) tragen, auf denen der Schaltring (23) mit ringabschnittförmigen Zentrierflächen (43) geführt ist.

10. Werkzeugmaschine nach Anspruch 8 oder 9, **dadurch gekennzeichnet, dass** vom Schaltring (23) eine der Anzahl der Spannkeile (37) entsprechende Zahl von um vorzugsweise gleiche Umfangswinkel versetzte Anschlagnasen (44) radial nach innen vorstehen, deren eine Radialfläche eine Anschlagfläche (441) für einen Wälzkörper (38) und deren davon abgekehrte andere Radialfläche eine Abstützfläche (442) für eine Druckfeder (41) bildet.

11. Werkzeugmaschine nach einem der Ansprüche 7 - 10, **dadurch gekennzeichnet, dass** am Schaltring (23) eine der Anzahl der Spannkeile (37) entsprechende Zahl von in Umfangsrichtung sich erstreckenden, bogenförmigen Spannflächen (45) so ausgebildet sind, dass von den Stützringen (21, 22) auf die Spannkeile (37) aufgebrachte, radial nach außen wirkende Kraftkomponenten die zwischen Spannkeilen (37) und Spannflächen (45) einliegenden Wälzkörper (38) auf die Spannflächen (45) aufpressen, und dass jede Spannfläche (45) eine Einwölbung (46) zum zumindest teilweise Aufnehmen eines Wälzkörpers (38) aufweist.

12. Werkzeugmaschine nach Anspruch 10 oder 11, **dadurch gekennzeichnet, dass** am freien Ende der Anschlagnasen (44) auf voneinander abgekehrten Axialseiten der Anschlagnasen (44) Abschrägungen (47) vorgesehen sind, über die der Schaltring (23) auf den Schrägflächen (211, 221) der Stützringe (21, 22) axial geführt ist.

13. Werkzeugmaschine nach einem der Ansprüche 10 -12, **dadurch gekennzeichnet, dass** der Schaltring (23) ein T-förmiges Querschnittsprofil mit einem in Achsrichtung sich erstreckenden Quersteg (231) und einem in Radialrichtung sich erstreckenden Mittelsteg (232) aufweist, dass die Zentrierflächen (43), die Spannflächen (45) mit Einwölbungen (46) und die Anschlagnasen (44) an dem vom Quersteg (231) abgekehrten Ende des Mittelstegs (232) ausgebildet sind und dass außen auf dem Quersteg (231) eine Grifffläche (48) zum manuellen Drehen des Schaltrings (23) ausgebildet ist.

## Claims

1. Power tool, in particular diamond drilling machine, comprising a rotationally drivable spindle (11) which has an end section (111) provided with an external thread (14), comprising a tool (12), in particular a drill bit, which has a hollow-cylindrical tool shank (16) provided with an internal thread (15) for screwing onto the spindle end section (111), and comprising a release device (13) which is arranged between tool shank (16) and spindle (11), is captively secured to the spindle (11) and has a supporting ring (21) fixed on the spindle (11), a supporting ring (22) which sits at a distance therefrom on the spindle (11), is axially displaceable to a limited extent, is held on the other supporting ring (21) in a rotationally fixed manner and is supported on the end face of the tool shank (16), and a control ring (23) which engages between the supporting rings (21, 22), can be rotated manually and is intended for changing the clear distance between the supporting rings (21, 22), **characterized in that** the supporting ring (21) fixed with respect to the spindle sits loosely on the spindle (11) such as to bear axially against an annular shoulder (19) formed on the spindle (11) and has at least two axial through-holes (24), through which a respective axial pin (25) inserted into the spindle (11) in the region of the annular shoulder (19) in a frictional and/or positive-locking manner passes in a positive-locking manner, and **in that** the supporting ring (22) on the tool-shank side has at least two axial holes (26), into which a respective axial pin (25) plunges in a sliding manner.

2. Power tool according to Claim 1, **characterized in that** the axial holes (26) are designed as blind holes.

3. Power tool according to Claim 1 or 2, **characterized in that** the annular shoulder (19) is formed on a radial flange (17) integrally formed in one piece on the spindle (11).

4. Power tool according to one of Claims 1 to 3, **characterized in that** a snap ring (27) is provided for limiting the axial displacement of the supporting ring (22) on the tool-shank side, said snap ring (27) resting in a circumferential groove (28) incorporated in the spindle (11).

5. Power tool according to one of Claims 1 to 4, **characterized in that** two sealing rings (31, 32) resting in a respective circumferential annular groove (29, 30) incorporated in the spindle (11) press against the inner annular surfaces of the supporting rings (21, 22), and **in that** the outer annular surfaces of the supporting rings (21, 22) are sealed off from the control ring (23) by means of a respective lip seal (33, 34).

6. Power tool according to Claims 3 and 5, **characterized in that** the lip seal (33) assigned to the supporting ring (21) fixed with respect to the spindle at least partly overlaps the radial flange (17).

7. Power tool according to one of Claims 1 to 6, **characterized in that** the supporting rings (21, 22), on sides facing one another, have sloping surfaces (211, 221), the clear distance apart of which narrows towards the spindle (11), and **in that** segment-like clamping wedges (37) offset from one another by preferably the same circumferential angle are arranged between the sloping surfaces (211, 221), which clamping wedges (37), with wedge surfaces (371, 372) formed on sides facing away from one another, rest on the sloping surfaces (211, 221) of the supporting rings (21, 22) and are radially displaceable via rolling elements (38), preferably cylindrical rollers, arranged between the clamping wedges (37) and the control ring (23).

8. Power tool according to Claim 7, **characterized in that** one of the supporting rings (21, 22), preferably the supporting ring (21) fixed with respect to the spindle, has a number of axially projecting, roughly Z-shaped ribs (39) corresponding to the number of clamping wedges (37), said ribs (39) having an inner and an outer leg (391, 392), each extending in the circumferential direction, and having a radial web (393) connecting the legs (391, 392), **in that** a respective clamping wedge (37) rests between the radial web (393) of the one rib (39) and the free end of the inner leg (392) of the adjacent rib (39) in the circumferential direction and is partly overlapped by the outer leg (391) of the rib (39), **in that** the free end of the outer leg (391) forms a stop surface (40) for one of the rolling elements (38), and **in that** a compression spring (41) extending in the circumferential direction bears against the inner leg (392) and is supported on the one side on the radial web (393) of the rib (39) and on the other side on the control ring (23).

9. Power tool according to Claim 8, **characterized in that** the Z-shaped ribs (39) have radially projecting guide studs (42), on which the control ring (23) is guided with centring surfaces (43) in the shape of an annular section.

10. Power tool according to Claim 8 or 9, **characterized in that** a number of stop lugs (44) corresponding to the number of clamping wedges (37) and offset by preferably the same circumferential angle project radially inwards from the control ring (23), the one radial surface of which stop lugs (44) forms a stop surface (441) for a rolling element (38) and their other radial surface facing away therefrom forms a supporting surface (442) for a compression spring (41).

11. Power tool according to one of Claims 7 to 10, **characterized in that** a number of curved clamping surfaces (45) corresponding to the number of clamping wedges (37) and extending in the circumferential direction are formed on the control ring (23) in such a way that force components applied to the clamping wedges (37) by the supporting rings (21, 22) and acting radially outwards press the rolling elements (38) resting in place between clamping wedges (37) and clamping surfaces (45) onto the clamping surfaces (45), and **in that** each clamping surface (45) has an arched cavity (46) for at least partly accommodating a rolling element (38).

12. Power tool according to Claim 10 or 11, **characterized in that** bevels (47) are provided on the free end of the stop lugs (44) on axial sides of the stop lugs (44) facing away from one another, via which bevels (47) the control ring (23) is axially guided on the sloping surfaces (211, 221) of the supporting rings (21, 22).

13. Power tool according to one of Claims 10 to 12, **characterized in that** the control ring (23) has a T-shaped cross-sectional profile having a transverse web (231) extending in the axial direction and a centre web (232) extending in the radial direction, **in that** the centring surfaces (43), the clamping surfaces (45) with arched cavities (46) and the stop lugs (44) are formed on that end of the centre web (232) which faces away from the transverse web (231), and **in that** a gripping surface (48) for manually rotating the control ring (23) is formed on the outside on the transverse web (231).

## Revendications

1. Machine-outil, notamment perceuse à diamants comportant :
une broche (11) entraînée en rotation, ayant un segment d'extrémité (111) muni d'un filetage extérieur (14),
un outil (12) notamment une couronne de perçage munie d'une tige d'outil (16) cylindrique, creuse, ayant un filetage intérieur (15) pour être vissé sur le segment d'extrémité de broche (111), et
un dispositif de libération (13) monté sur la broche (11), et fixé de manière imperdable entre la tige d'outil (16) et la broche (11), ce dispositif de libération comportant une bague d'appui (21) fixée sur la broche (11) et une bague d'appui (22) coulissant axialement de manière limitée, installée sur la broche (11) de façon écartée de la bague d'appui fixée, et tenue solidairement en rotation à l'autre bague d'appui (21) pour s'appuyer contre la surface frontale de la tige d'outil (16), et il comporte en outre une bague de commutation (23) que l'on tourne à la main, qui vient prendre entre les bagues d'appui (21, 22) pour modifier l'écartement libre entre les bagues d'appui (21, 22),
**caractérisée en ce que**
la bague d'appui (21) fixée à la broche (11) et appliquée librement axialement contre un épaulement annulaire (19) réalisé sur la broche (11), comporte au moins deux perçages traversants (24), dirigés axialement, chacun des perçages étant traversé dans une liaison par la forme, par une broche axiale (25) logée respectivement dans la broche (11) au niveau de l'épaulement annulaire (19) dans une liaison par la force et/ ou par la forme, et
la bague d'appui (22) du côté de la tige d'outil comporte au moins deux perçages axiaux (26) dans lesquels une broche axiale (25) respective plonge de manière coulissante.

2. Machine-outil selon la revendication 1,
**caractérisée en ce que**
les perçages axiaux (26) sont des perçages borgnes.

3. Machine-outil selon la revendication 1 ou 2,
**caractérisée en ce que**
l'épaulement annulaire (19) est réalisé sur une bride radiale (17) formée en une seule pièce sur la broche (11).

4. Machine-outil selon l'une des revendications 1 à 3,
**caractérisée par**
une bague élastique (27) pour limiter le coulissement axial de la bague d'appui (22) du côté de l'outil, cette bague élastique étant logée dans une rainure périphérique (28) usinée dans la broche (11).

5. Machine-outil selon l'une des revendications 1 à 4,
**caractérisée en ce que**
chaque fois deux joints d'étanchéité (31, 32) logés dans l'une des rainures périphériques (29, 30) usinées dans la broche (11), se pressent contre les surfaces annulaires intérieures des bagues d'appui (21, 22) et les surfaces annulaires extérieures des bagues d'appui (21, 22) sont rendues chacune étanches par rapport à la bague de commutation (23) par un joint à lèvres (33, 34).

6. Machine-outil selon la revendication 3 ou 5,
**caractérisée en ce que**
le joint à lèvres (33) associé à la bague d'appui (21) fixée sur la broche entoure au moins en partie la bride radiale (17).

7. Machine-outil selon l'une des revendications 1 à 6,
**caractérisée en ce que**
les bagues d'appui (21, 22) ont des surfaces inclinées (211, 221) sur leur côté en regard et dont la distance libre va en diminuant vers la broche (11) et
entre les surfaces inclinées (211, 221), il y a des coins de serrage (37) en forme de segment, décalés les uns par rapport aux autres de préférence suivant un angle périphérique identique, ces coins de serrage s'appuyant par les surfaces de coin (371, 372) réalisées sur les côtés non en regard, contre les surfaces inclinées (211, 221) des bagues (21, 22) et ils peuvent coulisser radialement par des organes de roulement (38), notamment des galets cylindriques, entre les coins de serrage (37) et la bague de commutation (23).

8. Machine-outil selon la revendication 7,
**caractérisée en ce que**
l'une des bagues d'appui (21, 22), de préférence la bague d'appui (21) fixée à la broche, comporte un nombre de nervures (39) sensiblement en forme de Z, venant axialement en saillie et correspondant au nombre des coins de serrage (37), ces nervures ayant une branche (391, 392) intérieure et extérieure, s'étendant chacune dans la direction périphérique et une branche radiale (393) reliée à l'une des branches (391, 392),
chaque fois, un coin de serrage (37) est logé entre la branche radiale (393) d'une nervure (39) et l'extrémité libre de la branche intérieure (392) de la nervure (39) voisine dans la direction périphérique et elle est chevauchée partiellement par la branche extérieure (391) de la nervure (39),
l'extrémité libre de la branche extérieure (391) forme une surface de butée (40) pour un organe de roulement (38), et
un ressort de compression (41) s'étendant dans la direction périphérique s'applique contre l'intérieur de la branche (392), ce ressort de compression s'appuyant à son tour contre la branche radiale (393) de la nervure (39) et contre la bague de commutation (23).

9. Machine-outil selon la revendication 8,
**caractérisée en ce que**
les nervures (39) en forme de Z portent des bossages de guidage (42) venant radialement en saillie et servant au guidage de la bague de commutation (23) avec des surfaces de centrage (42) en forme de segment d'anneau.

10. Machine-outil selon la revendication 8 ou 9,
**caractérisée en ce qu'**
des becs de butée (44) décalés de préférence de manière équiangulaire et dont le nombre correspond au nombre de coins de serrage (37) sont radialement en saillie vers l'intérieur et une de leurs surfaces radiales constitue une surface d'appui (441) pour un organe de roulement (38) et dont l'autre surface radiale, opposée, constitue une surface d'appui (442) pour un ressort de compression (41).

11. Machine-outil selon l'une des revendications 7 à 10,
**caractérisée en ce qu'**
des surfaces de serrage (45) de forme courbe, s'étendant dans la direction périphérique, et dont le nombre correspond au nombre de coins de serrage (37) sont réalisées sur la bague de commutation (23),
des composantes de force agissant radialement vers l'extérieur sont appliquées par les bagues d'appui (21, 22) sur les coins de serrage (37), ces composantes de force pressant les organes de roulement (38) placés entre les coins de serrage (37) et les surfaces de serrage (45) sur les surfaces de serrage (45), et
chaque surface de serrage (45) comprend une partie en creux (46) pour recevoir au moins partiellement un organe de roulement (38).

12. Machine-outil selon la revendication 10 ou 11,
**caractérisée en ce qu'**
à l'extrémité libre des becs de butées (44) sur leurs côtés axiaux opposés les uns aux autres sont prévues des surfaces inclinées par lesquelles la bague de commutation (23) peut être guidée axialement sur les surfaces inclinées (211, 221) des bagues d'appui (21, 22).

13. Machine-outil selon l'une des revendications 10 à 12,
**caractérisée en ce que**
la bague de commutation (23) présente un profil à section en forme de T dont la branche transversale (231) s'étend dans la direction axiale et la branche intermédiaire (232), s'étend dans la direction radiale,
les surfaces de centrage (43), les surfaces de serrage (45) avec les parties en creux (46) et les becs de butée (44) sont réalisés à l'extrémité de la branche centrale (232) non tournée vers la branche transversale (231) et extérieurement, la branche transversale (231) comporte une surface de préhension (48) pour tourner manuellement la bague de commutation (23).
